# EUROPEAN PATENT SPECIFICATION

(11) **EP 4 523 010 B1**
(45) Date of publication and mention of the grant of the patent: **28.10.2026**
(21) Application number: 24711573.6
(22) Date of filing: 19.03.2024
(51) Int. Cl.: G01S 7/497, G01S 17/58, G01S 17/95, G01P 5/26

(54) **CORRECTION OF TURBULENCE INTENSITY**
KORREKTUR DER TURBULENZINTENSITÄT
CORRECTION DE L'INTENSITÉ DE TURBULENCE

(30) Priority: 18.04.2023 EP 23382354
(43) Date of publication of application: 19.03.2025
(73) Proprietor: Eolos Floating Lidar Solutions, S.L., 08110 Montcada I Reixac (ES)
(72) Inventor: MIQUEL MORENO, Adrià, 08036 BARCELONA (ES); RAPISARDI, Giacomo, 43003 TARRAGONA (ES); PUIGCORBÉ PUNZANO, Jordi, 08912 BADALONA (ES)
(74) Representative: Bardehle Pagenberg S.L.
(86) International application number: PCT/EP2024/057219
(87) International publication number: WO 2024/217799

(56) References cited:
- CN-A- 114 218 860
- DE-B3- 102015 103 757
- US-A1- 2014 300 888
- US-A1- 2020 264 313
- US-A1- 2021 239 094
- US-A1- 2021 311 196

## Description

The present disclosure relates to methods directed to correct a turbulence intensity value. A turbulence intensity value may be corrected by or by the use of a correction model. The present disclosure defines methods to generate correction models.

### BACKGROUND

Before installing or constructing an offshore infrastructure in an offshore site, meteorological measurements and/or inspections may be required. Examples of offshore infrastructures may be offshore wind farms having a plurality of offshore wind turbines, oil and gas equipment, offshore electrical substations, or underwater power cables.

Wind speed measurements may be relevant for the wind energy industry to validate assumptions about wind conditions at a potential wind farm site. Wind speed is generally used to assess the wind resource of a potential wind farm site. Wind power developers use the wind resource of a site to categorize the type of wind and to estimate the future energy production of a wind farm. Wind resource assessment requires measuring wind speed for a relatively long time.

The wind speed may be measured by instruments, for example, cup anemometers, sonic anemometers, or others. The instruments are commonly attached to fixed meteorological masts or "met towers" installed offshore in deep water areas and at various heights to measure the weather conditions at different heights. Measuring wind speeds at an offshore site at different heights may allow for estimating the wind characteristics that would experience wind turbines installed at said offshore site. While the instruments may provide accurate measurements, construction, and maintenance of met towers in deep water areas to hold the instruments may be costly. Furthermore, the installation of fixed met towers may take a relatively long time. Transporting and erecting the met tower may also involve using large vessels and heavy lifting equipment.

Turbulence intensity, Tl, may be used to assess the wind resource of a site. Turbulence Intensity is a means to express a high order variability of the wind speed over time and space. TI is traditionally computed as the ratio between the standard deviation and the mean values of the wind speed over a period of ten minutes using cup anemometer readings at 1Hz. Cup anemometers arranged at different heights of a met tower may thus be used to determine turbulence intensity at different heights.

A number of remote sensing technologies, such as light detection and ranging, LIDAR, or sound detection and ranging, SODAR, may also provide wind speed measurements. For example, LIDARS may be used to measure wind characteristics that wind turbines may experience. To this end, LIDARS may be arranged at the nacelle of a wind turbine. Alternatively, LIDARS may be mounted on the ground for onshore sites or on a floating platform for offshore sites. These types of LIDARS are commonly known as vertical LIDARS. The remote sensing technologies may be employed for determining turbulence intensity at different heights. However, values of turbulence intensity measured with cup anemometers mounted at met towers significantly differ from those measured with a LIDAR. These differences are even greater when the LIDAR is mounted on a floating platform. Turbulence intensity, TI, values based on Floating LIDAR measurements is an unresolved topic in the wind industry. The values of TI may vary between 30% to 40% higher when the measurement is performed by a floating LIDAR rather than by a fixed cup anemometer. The motion of the Floating LIDAR may influence the wind speed measured with the Floating LIDAR. CN114218860A relates to machine learning based laser radar wind-measuring motion compensation for calculating wind speed, wind direction and other wind parameters.

Accordingly, there is a need to correlate floating LIDAR based TI values with TI values obtained based on measures from a fixed anemometer.

### SUMMARY

In a first aspect, a computer-implemented method to correct a turbulence intensity value, TI value, according to claim 1 is provided. The method to correct the turbulence intensity value comprises providing a correction model to correct the turbulence intensity value. The method for providing a correction model comprises the steps of:
- retrieving one or more input signals, the input signals comprising at least
   - a LIDAR-based turbulence intensity value, LIDAR_TI value, based on wind speeds measured by a floating LIDAR at one or more measurement heights;
   - at least an anemometer-based turbulence intensity value, ANEMO_TI value, based on wind speeds measured by at least one anemometer mounted on a meteorological mast, at the one or more measurement heights;
   - a standard deviation of horizontal wind speed at the one or more measurement heights measured by the floating LIDAR; and
   - sea state measures, the sea state measures comprising one or more of: wave measures; significant wave height; significant wave period; mean wave direction, and sea water temperature. The sea state measures may be obtained by a sea state sensor system including one or more of: the floating LIDAR, IMU, accelerometer, radar, salinity meter, wave sensor and temperature sensor;
- and providing a correction model by training a computer-implemented machine-learning, ML, model, in a supervised manner using training variables to map at least a subset of the input signals to a corresponding ratio LIDAR_TI/ANEMO_TI value, wherein the training variables comprise the at least a subset of the input signals and a corresponding result ratio LIDAR_TI/ANEMO_TI value per each one of the one or more measurement heights; the at least a subset of the input signals comprising a LIDAR_TI value at the one or more measurement heights, the standard deviation of horizontal wind speed at the one or more measurement heights measured by the floating LIDAR, and the sea state measures.

The sea state measures may be obtained by a sea state sensor system including one or more of: the floating LIDAR, IMU, accelerometer, radar, salinity meter, wave sensor and temperature sensor. In some examples, the sea state measures may also comprise salinity.

The LIDAR_TI value is computed as a ratio between the standard deviation of the wind speeds measured by the floating LIDAR and the mean values of the corresponding wind speeds measured by the floating LIDAR over a period of time, for example over 10 minutes. The LIDAR_TI value may be provided by the floating LIDAR or may be computed by a processor.

The standard deviation of horizontal wind speed at the one or more measurement heights may be provided by the LIDAR or may be calculated based on measures obtained from/by the LIDAR. The standard deviation may be measured as the square root of the average square of the difference between the horizontal wind speed at a measurement height and the average horizontal wind speed at the measurement height, over a time period, the time period for example of 10 minutes.

In this disclosure, a floating LIDAR shall be understood as a floating structure comprising a LIDAR unit. A LIDAR unit may be integrated onto a standalone floating structure, such as a buoy or a vessel, and situated offshore or on the sea. Floating LIDARs are configured to take offshore wind measurements from a vertical profiling LIDAR. A floating LIDAR may be understood as a system comprising a LIDAR unit and a processor. The processor may be configured to obtain wind speed measures and obtain values of, at least, Turbulence Intensity based on the wind speed measures. An anemometer may comprise a cup anemometer, a sonic anemometer, and/or others. The methods of the present disclosure provide a correction model by training a ML model in a supervised manner, by providing a set of training variables comprising a subset of the input signals and a known result, or ground-truth ratio LIDAR_TI/ANEMO_TI value, ratio LIDAR_TI/ANEMO_TI, also referred to as ratio TI. The ML model learns which ratio corresponds to each of the subset of input signals to the model so that the model becomes capable of generating a new ratio for new input parameters. The subset of the input signals comprising at least a LIDAR_TI value at the one or more measurement heights, the standard deviation of horizontal wind speed at the one or more measurement heights measured by the floating LIDAR, and the one or more sea state measures. The input signals and/or the subset of input signals may comprise other parameters or variables such as parameters given by the floating LIDAR or secondary computed or retrieved parameters, as in the examples below. The subset of input signals may comprise at least a subset of the retrieved signals and at least a subset of pre-processed signals from the retrieved input signals.

The methods of the disclosure provide a correction model by training the ML model. In other words, the correction model comprises at least the trained ML model. Once a correction model is provided, a method to correct a current LIDAR_TI value may comprise using the correction model to correct the current LIDAR_TI value. For example, the correction model provides an inferred ratio LIDAR_TI/ANEMO_TI value (ratio LIDAR_TI/ANEMO_TI, also referred to as ratio TI), and the method to correct the current LIDAR_TI value may comprise providing a corrected TI value by multiplying the inferred (ratio LIDAR_TI/ANEMO_TI)^{- 1} value times the current LIDAR_TI. Advantageously, Artificial Intelligence based on ML or regression models is implemented by the methods of the present disclosure to provide an accurate correction model which is capable of providing a current ratio LIDAR_TI/ANEMO_TI to be used to compute a corrected value of Turbulence Intensity, TI, when the TI is calculated based on measured parameters by a LIDAR or floating LIDAR.

In some examples retrieving one or more input signals comprises receiving the wind speeds measured by the floating LIDAR from the floating LIDAR; obtaining the at least a LIDAR_TI value based on the wind speeds received from the floating LIDAR; receiving the wind speeds measured by at the least one anemometer mounted on a meteorological mast at the one or more measurement heights from the at least one anemometer; and obtaining the at least an ANEMO_TI value based on the wind speeds received from the at least an anemometer. Advantageously the retrieved data may be analysed online in real time.

In such examples a floating LIDAR and one or more anemometers in a meteorological mast may provide wind speeds measured by them. The wind speeds may be read or may be received by the methods of the present disclosure and LIDAR_TI values and ANEMO_TI values may be obtained afterwards.

In other examples the wind speeds may reside in databases which may be accessed by the methods of the present disclosure. In such examples retrieving one or more input signals comprises receiving the wind speeds measured by the floating LIDAR from a first database; obtaining the at least a LIDAR_TI value based on the wind speeds received from a second database; receiving the wind speeds measured by at the least one anemometer mounted on a meteorological mast from a third database; and obtaining the at least an ANEMO_TI value based on the wind speeds received from a fourth database; wherein the first, second, third and fourth database are the same or different databases. Advantageously the retrieved data may be stored and analysed offline.

Regardless of how the retrieving one or more input signals has been performed, obtaining LIDAR_TI values based on wind speeds at a measurement height, h, wherein the wind speeds are measured by a floating LIDAR, may comprise receiving, by any means of communication, wind speed values from a floating LIDAR and determine or calculate TI values. Determining or calculating LIDAR_TI values may comprise calculating a LIDAR _TI value as the ratio between the standard deviation and the mean values of the wind speed over a period of time, for example, of ten minutes, using the wind speed measured by the floating LIDAR.

Obtaining LIDAR_TI values may alternatively comprise receiving, via any means of communication, a TI value based on data obtained from a LIDAR and receiving, via the same means of communication or a different means, wind speed values related to the received TI value. An association or a correlation may be made between values of wind speeds or mean values over a period of time of wind speeds and a TI value; for example, pairs of values [TI, wind speed] may be obtained or may be determined or may be received by any means of communication or determined in any format, such that the TI values are associated or correlated to one or more values of wind speeds or mean wind speeds over a period of time, for example over 10 minutes.

The means of communication may be wired or wireless. Wired communication comprises a transmission of data over a wire-based communication technology. Examples may include telephone networks, cable, internet and/or fibre-optic communication. The wired communication may be based on the use of Ethernet cables or Fiber optic to transfer data between the LIDAR and a receiver, for example a processor. The wireless communication may comprise the use of radio waves, satellite or mobile networks or a combination of them, and may cover short distances, such as a few meters for Bluetooth or as far as millions of kilometres for maritime radio communications. In some examples the LIDARs may be configured to wirelessly communicate with a processor, for example via a wireless modem and an antenna. The processor may then calculate the LIDAR_TI values according to any of the methods described herein.

Following the same approach, obtaining ANEMO_TI values based on wind speeds, the wind speeds measured by at least a wind speed sensor at the measurement height, h, may comprise determining a TI value based on wind speeds values measured by an anemometer, or receiving, by any means of communication, a TI value from a datalogger in an anemometer and receiving by the same means of communication or a different means, the wind speed values associated with the determined or received TI value. The determination of an ANEMO_TI value may comprise receiving a wind speed measure from a wind speed sensor, for example from a cup anemometer, and calculating the ANEMO_TI value as the ratio between the standard deviation and the mean values of the wind speed over a period of time, for example, ten minutes using the cup anemometer readings at 1Hz.

The expressions "obtaining LIDAR_TI values based on wind speeds" and "obtaining ANEMO_TI values based on wind speeds" may comprise that each value of TI, either LIDAR-based or ANEMO-based, corresponds to, or is associated with, or is correlated to a value of wind speed. In other words, the values of TI which are obtained correspond to particular values of wind speed. The wind speeds may comprise "averages or mean values of wind speed values at the measurement height, h" and may further comprise "over a period of 10 minutes". "Over a period of 10 minutes" may comprise "over a period of 10 minutes at a sampling frequency", and for example the sample frequency may be 1Hz.

The wind speed may comprise horizontal wind speed at the measurement height, h.

Obtaining ANEMO_TI values and LIDAR_TI values forms part of a so-called training phase of the method for providing a correction model. The more data is obtained regarding ANEMO_TI and LIDAR_TI the best training is ensured of the correction model which is being generated by the methods of the present disclosure.

The training phase plays a role in the accuracy of the correction model provided by training a ML model. For example, training variables or parameters may be specifically selected and/or computed. The subset of the input signals may comprise a selection from the retrieved one or more of the input signals and/or may comprise secondary variables which may be computed from the retrieved one or more input signals, or may be retrieved from secondary sensors, such as air or water temperature sensor, and/or the secondary variables may comprise computed signals from the signals retrieved from the secondary sensors, as will be illustrated in the examples below.

Different ML models may be chosen to learn a correlation between input signals and a ratio LIDAR_TI/ANEMO_TI, also referred to as ratio TI. Decision trees, neural networks or gradient boosting models may be used. Regression techniques may be implemented.

Measuring principles and the motion of the floating LIDARs amount to measurement disagreements between an anemometer and floating LIDARs. Floating LIDARs are systems deployed on the surface of the sea, usually in deep water areas. Waves and currents induce motion to the floating LIDARs. Anemometers measure wind speed at an exact point in space of the anemometers location while LIDARs perceive the wind speed over a volume, usually referred to as probe volume or probe length. This effect is referred to as volumetric effect. Furthermore, anemometers tend to measure at a constant frequency of 1 Hz, while LIDARs may vary their sampling frequency in relation with the number of configured measurement heights, varying in turn the statistical representativeness of the measures. This may particularly be the case for Continuous Wave (CW) LIDARS. Advantageously some examples of the present disclosure present methods for generating a correction model which tackles the volumetric effect.

The correction model obtained by the methods of the present disclosure defines relationships between the properties derived from the measured values by a floating LIDAR and the measured values from a fixed anemometer. The relationships are found by the correction model or trained ML model.

Advantageously, the correction model provided by the method of the present disclosure avoids compensating for motions of a floating platform by keeping track of tilt, pitch, roll and yaw of the platform. Accordingly, the hardware associated to the control of such motions is neither required by systems configured to implement the generation of the correction model according to this disclosure nor by systems using the generated correction model to correct a TI value based on LIDAR measurements.

In some examples of the present disclosure, relationships between properties derived from the measured values by a floating LIDAR and the measured values by one or more fixed anemometers are found by a ML model representing a ratio TI in response to the wind speed, the measurement height or heights, sea state measures or variables, and in examples among others, as will be illustrated in the examples below.

The computer-implemented method to correct a (LIDAR) turbulence intensity (LIDAR) TI value further comprises providing a set of environmental variables to the correction model provided by a method for providing a correction model according to the present disclosure. The method to correct the turbulence intensity further comprises obtaining, from the correction model, a current ratio LIDAR_TI/ANEMO_TI per each of the one or more measurement heights; and providing a corrected LIDAR_TI value by computing the multiplication of the current (ratio LIDAR_TI/ANEMO_TI)⁻¹ times the turbulence intensity TI value, such that corrected LIDAR_TI value equals the multiplication operation "current ratio ANEMO_TI/LIDAR_TI* turbulence intensity TI value". Note that the method to provide a ratio LIDAR_TI/ANEMO_TI is also to provide a ratio ANEMO_TI/LIDAR_TI. The environmental variables may comprise the training variables used for training the ML model, as will be illustrated by the examples below, the environmental variables associated to the ratio TI which is unknown and which the correction model will provide in operation.

The one or more measurement heights for which environmental variables are obtained need may or may not be the same as the one or more measurement heights from which the ML model has been trained. Advantageously the present disclosure provides a versatile correction model which provides a ratio TI useable to correct a current LIDAR_TI value.

The method of the present disclosure allows using a floating LIDAR for accurately assessing wind resources in an offshore site. In examples, a floating LIDAR provides a current LIDAR_TI value, and the current LIDAR_TI value is corrected by multiplying the current LIDAR_TI * ratio TI, where the ratio TI is obtained by the correction model of the disclosure, when the correction model is inputted with a standard deviation of horizontal wind speed at the one or more measurement heights based on wind measurements from the floating LIDAR, LIDAR_TI value at the one or more measurement heights, and the one or more sea state measures. The methods of the disclosure allow for a flexible and cost efficient solution to obtain accurate or corrected TI values. Flexibility is ensured by a floating platform on which the LIDAR may rest. A floating platform may be moved over the surface of the sea, whereas other solutions, requiring installation of masts, may be fixed over time. Besides, values of corrected TI obtained directly by the methods of the present disclosure avoid the use of specific explicit motion data and therefore the necessity of dedicated sensors or hardware to compensate for motion of the floating platform, for example.

In a further aspect of the invention there is provided a computer program product comprising instructions which, when the program is executed by a computer, causes the computer to carry out the steps of a method to correct a turbulence intensity TI value according to the present disclosure.

In a further aspect of the invention there is provided a system to correct a turbulence intensity TI value, the system comprising a correcting processor; and a non-transitory computer readable media in communication with the correcting processor, and storing instructions code which, when executed by the processor, causes the processor to perform the steps of a method to correct a turbulence intensity TI value of the present disclosure.

In some examples, the non-transitory computer readable media stores the correction model once the ML model has been trained in a supervised manner using training variables to map a subset of input signals to a corresponding ratio LIDAR_TI/ANEMO_TI value, wherein the training variables comprises the subset of input signals and a corresponding ground-truth ratio LIDAR_TI/ANEMO_TI value per each of one or more measurement heights; the subset of the input signals comprising at least a LIDAR_TI value at the one or more measurement heights, the standard deviation of horizontal wind speed at the one or more measurement heights measured by the floating LIDAR, and the one or more sea state measures.

In some examples, the system further comprises a LIDAR mounted on a floating platform.

In some examples the system for providing a correction model the floating platform comprises a communication module configured to receive wind-speeds from a meteorological mast.

In some examples, the system to correct a turbulence intensity TI value further comprises a LIDAR mounted on a floating platform.

In a further aspect of the invention there is provided a non- transitory readable storage medium storing a correction model provided by any one of the methods for providing a correction model of the disclosure; and/or instructions which, when performed by a processor, cause the processor to perform any one of the methods of the present disclosure.

Advantages derived from these aspects may be similar to those mentioned regarding the first aspect. As it may become apparent, an oceanographic/sea state based correction algorithm for Turbulence Intensity measured by Floating Lidars is obtained by the present disclosure. In some examples, atmospheric measures may be also considered for correcting turbulence intensity measures. Floating Lidars Systems, FLS, play a fundamental role in providing affordable high-quality data within the off-shore wind industry.

### BRIEF DESCRIPTION OF THE DRAWINGS

Non-limiting examples of the present disclosure will be described in the following, with reference to the appended drawings, in which:
Figure 1 schematically represents a measurement system 10 on the sea surface, not forming part of the claims.
Figure 2 shows a method 200 for generating a correction, not forming part of the claims.
Figure 3 shows an interpretation of a model, not forming part of the claims.
Figure 4 shows an interpretation of a model, not forming part of the claims.
Figure 5 shows an example implementation of a measurement system 50, not forming part of the claims.
Figure 6 represents a controller and a computing program, not forming part of the claims.
Figure 7 represents an example of a controller and a processor, not forming part of the claims.
Figure 8 represents a system 80 for providing a correction model to correct a TI value according to the present disclosure.
Figure 9 schematically represents a non-limiting example of a system according to the present disclosure.
Figure 10 shows an example of a method 100 for providing a correction model to correct a TI value according to the present disclosure.
Figure 11 shows an example system 110 to correct a turbulence intensity TI value according to the present disclosure.
Figure 12 represents block diagrams representing steps of a method 120 to correct a TI value according to the present disclosure.
Figure 13 represents an example representation of a method 130 for providing a correction model of the disclosure.

### DETAILED DESCRIPTION OF EXAMPLES

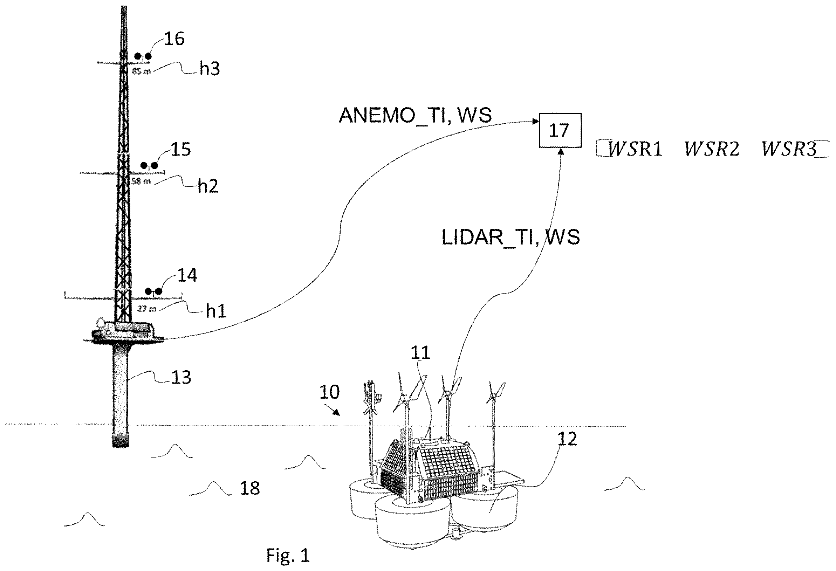

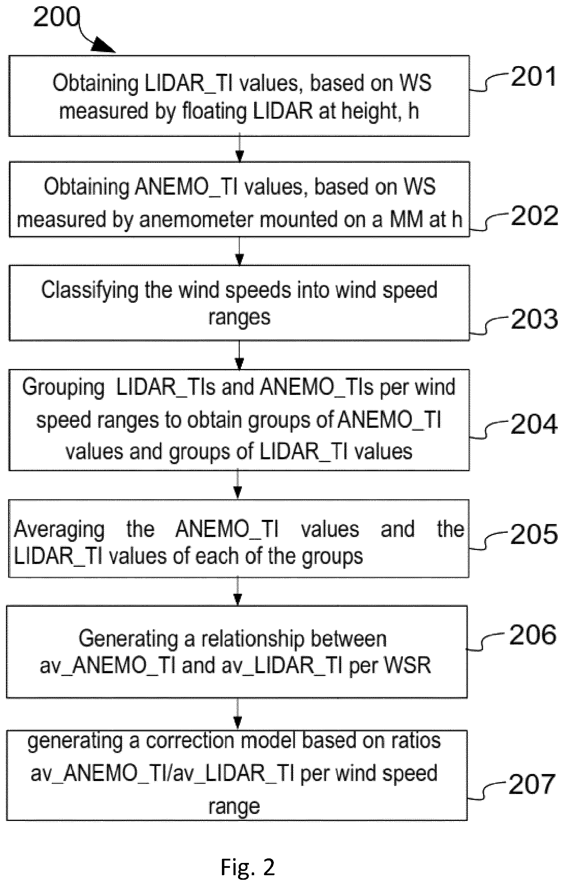

Figure 1 schematically represents a measurement system 10, not forming part of the claims, on the sea 18 according to the present disclosure. The measurement system 10 comprises a LIDAR 11 mounted on a floating platform 12. The measurement system 10 comprises a controller 17 or a computing system. Said controller or computing system 17, in the example of figure 1, may be comprised within the LiDAR 11 or be external to the LiDAR, and may be comprised in the platform 12 or may be remotely comprised. As seen in figure 1, there is shown an exemplary meteorological mast MM 13 with structures at different heights h1, h2, h3, each of them or one of them referred to as height h in the present disclosure. Each of the structures at different heights may comprise one or more anemometers 14, 15, 16. The controller or computing system 17 of the measurement system 10 is configured to perform a method 200, as shown in figure 2. The controller 17 or computing system of figure 1 receives, from the floating LIDAR, LIDAR_TI values and wind speed, WS, and the controller 17 receives, from the meteorological mast system 13, ANEMO_TI values. The controller 17 of figure 1 provides generates a model which considers 3 wind speeds groups or bins. The controller outputs the model which comprises the values represented as *WSR1 WSR2 WSR3* one for each corresponding wind speed ranges.

Figure 2 shows a method 200, not forming part of the claims, for generating a correction model to correct a turbulence intensity TI value. The method 200 may be referred to as a statistical method 200. The controller or computing system 17 of the measurement system 10 is configured to perform the method 200 for generating a correction model according to the present disclosure. In particular, the method 200 comprises, in block 201, obtaining LIDAR-based turbulence intensity values, LIDAR_TI values, based on wind speeds measured by the floating LIDAR 11 at one of the measurement heights, h; obtaining 202 ANEMO_based turbulence intensity values, ANEMO_TI values, based on wind speeds, the wind speeds measured by at least an anemometer 14, 15, 16 mounted on the meteorological mast 13, at the measurement height, h. The measurement heigh may be one of the heights h1, h2, or h3, which in figure 1 are shown as h1 27m, h2 58m and h3 85m. The method 200 may obtain values of TI for any other height, both from the LiDAR 11 and from the anemometer.

The method 200 comprises, in block 203, classifying the wind speeds into wind speed ranges. Classifying the wind speeds into wind speed ranges may comprise classifying the wind speed values into predefined groups, also referred to as bins, of wind speeds. Typically, wind speeds may vary between 1m/s and 30 m/s. Different ranges may be defined, or predefined, for example ranges of 1 m/s width or 2m/s width may be defined varying between 1 m/s and 30 m/s. Different ranges may be adjusted or may be variable depending on the evolution of the data obtained for generating the model. An artificial intelligence model may set the range center and range width to adapt to particular data.

In some examples, classifying the wind speeds into wind speed ranges, WS ranges, comprises classifying wind speeds varying from 4 m/s to 16 m/s into wind speed ranges of 1 m/s width: WS range 1 from 4 m/s to 8m/s, WS range 2 from 8,1 m/s to 12 m/s, WS range 3 from 12,1m/s to 16m/s. In some examples, a wind speed bin or a range of wind speeds comprises wind speeds from 4 to 16 m/s with 1 m/s range widths.

In block 204 the method 200 further comprises grouping the LIDAR_TI values and the ANEMO_TI values per corresponding wind speed ranges to obtain groups of ANEMO_TI values at each wind speed range and groups of LIDAR_TI value(s) at each wind speed range. Grouping the LIDAR_TI values and the ANEMO_TI values per corresponding wind speed ranges may comprise at least temporally storing pairs of TI values and wind speeds, and classify them into, or assign to them, a respective bin or group of wind speeds.

For example, if a TI value TI1 is associated to a wind speed of 5m/s, and the wind speed ranges comprise, for example, range 1: 1m/s-3 m/s and range 2: 3,1 m/s to 6m/s, then the TI1 associated to 5m/s may be grouped into the range 2 [3,1 m/s, 6m/s]. Classified groups of LIDAR_TI value(s) and classified groups of ANEMO_TI values are obtained thereby.

In block 205 the method 200 further comprises averaging the ANEMO_TI values and the LIDAR_TI values of each of the groups. Averaging the ANEMO_TI values and the LIDAR_TI values for each of the groups may comprise calculating the arithmetic mean, by adding the LIDAR_TI values and the ANEMO_TI values of each of the ranges and then dividing each addition by the count of those TI values in each range. The fact of obtaining the relationship between av_ANEMO_TI and av_LIDAR_TI per wind speed range allows considering the sea motion for obtaining a correction model which is specially adapted to offshore sites. This method is particularly adapted to offshore sites since wind speed affects the movement of the sea which in turn affects the movement of the floating LIDARs. In other words, the more wind speed, the more waves, and therefore more movement of the floating platform. The correction model generated by the methods of the present disclosure vary with movement implicitly through wind speed. In some examples, the training phase of the model comprises training the model with parameters correlated to motion associated to the floating platform through the wind speed.

For example, if the groups comprise:
- Values of LIDAR TI in the range_1, LIDAR_TI_range_1, may comprise 0.6, 0.5, 0.38 and 0.8; then the av_LIDAR_TI_range 1 may be (0,6+ 0,5+ 0,38+ 0,8)/4= 0,57.
- Values of LIDAR_TI_range_2: [0,7; 0,9; 0,1; 0,8] then the av_LIDAR_TI_ range 2 may be 0,625.
- ANEMO_TI_range_1: [0,65; 0,98; 0,13; 0,84] then the av_ ANEMO_TI_range 1 may be 0,65.
- ANEMO_TI_range_2: [0,55; 0,9; 0,108; 0,82] then the av_ ANEMO_TI_range 2 may be 0,59.

In block 206 the method 200 further comprises generating a relationship between av_ANEMO_TI and av_LIDAR_TI. Generating a relationship between the average av_ANEMO_TI values and each of the corresponding average av_LIDAR_TI values per wind speed range may be performed by an artificial intelligence, Al, model. For example, the Al model may use a machine learning algorithm or a deep learning algorithm which may stablish a relationship between av_LIDAR_TI values and av_ANEMO_TI values such that a correction model may be based on those relationships. In other examples, generating a relationship between the av_ANEMO_TI values the av_LIDAR_TI values may be performed by a statistical model or may be established as a ratio av_ANEMO_TI / av_LIDAR_TI per wind speed range.

In the particular example, generating a relationship between av_ANEMO_TI and av_LIDAR_TI comprises dividing each of the average av_ANEMO_TI values into each of the corresponding average av_LIDAR_TI values per wind speed range obtaining thereby a series of ratios av_ANEMO_TI / av_LIDAR_TI per wind speed range. Following the example above, this step provides the following series of ratios: [av_ANEMO_Tl_range 1/ av_LIDAR_TI_range 1; av_ANEMO_TI_range 2/av_LIDAR_TI_ range 2] = [1,14; 0,95].

In block 207 the method 200 further comprises generating a correction model based on the series of ratios av_ANEMO_TI/av_LIDAR_TI per wind speed range. Generating a correction model based on the relationship between av_ANEMO_TI and av_LIDAR_TI per wind speed range may comprise generating a correction model which is a function of the wind speed at the measurement height, h, per each wind speed bin. In some examples, generating a correction model based on the relationships per wind speed range is performed by statistical modelling or by artificial intelligence.

In some examples generating a correction model based on the series of ratios may comprise providing a correction model which comprises multiplying a correction factor by the TI_to_be_corrected. The correction factor may be the value of the series of ratios in the corresponding wind speed.

For example, if a TI_to_be_corrected is 0,8 and an associated wind speed WS is 4 m/s, then the WS range is range 2 and the corrected TI value is
corr_TI= TI to_be corrected * 0,95=0,8075, since:
WS [range 1 range 2] [1m/s-3 m/s ; 3,1 m/s - 6m/s]
Series of ratios [av_ANEMO_TI/av_LIDAR_TI] [ 1,14 ; 0,95 ]

In other examples the correction is not done discretely according to the ranges but continuously according to the actual WS and TI, for example: if a WS of 2m/s corresponds to a correction value of 0.85 and if a WS of 4 m/s corresponds to a correction value of 1,0375, then, WS 3m/s corresponds to a correction value of 0,94375.

In some examples, generating a correction model based on the series of ratios av_ANEMO_TI/av_LIDAR_TI per wind speed range is performed by statistical modelling or by artificial intelligence.

In some examples, generating the correction model based on the series of ratios ANEMO_TI / LIDAR_TI wind speed range comprises fitting a N-order polynomial to the series of ratios av_ANEMO_TI/av_LIDAR_TI per wind speed range, obtaining N+1 first coefficients, fc1, fc2, ..., fcN+1 , wherein the N negative-order polynomial (Laurent polynomials) is expressed as $r \left(v\right) = {\sum }_{k = 0}^{N} {fc}_{k} {v}_{h}^{- k}$
with k ∈ 1 to N+1 and where v is the wind speed at the measurement height, h.

In some examples, the method for generating a correction model further comprises implementing the step of fitting a N-order polynomial to the series of ratios av_ANEMO_TI/av_LIDAR_TI per wind speed range for two or more of the different measurement heights, h, thereby obtaining first coefficients *fcₖ*(*h*) for each of the two or more of the measurement heights, h;
- fitting a second polynomial to each of the coefficients *fcₖ*(h) with respect to the measurement height, h, obtaining thereby second coefficients, scₖ(h), wherein the second polynomial depends on the measurement height, h, and is expressed as ${sc}_{k} \left(h\right) = {\sum }_{j = 0}^{M} {x}_{kj} {h}^{j}$;
- substituting the first coefficients by the second coefficients in r(v); and
- obtaining the correction model as a correction factor, c, as a function of measurement heigh, h, and wind speed, v, at the measurement height, expressed as: $c \left(h, v\right) = {\sum }_{k = 0}^{N} \left({\sum }_{j = 0}^{M} {x}_{kj} {h}^{j}\right) {v}_{h}^{- k} .$

In some examples the negative N-order polynomial is a 1st negative order polynomial expressed as
$r \left(v\right) = {\sum }_{k = 0}^{1} {fc}_{k} {v}_{h}^{- k} = {fc}_{1} {v}_{h}^{- 1} + {fc}_{0}$
where v is the wind speed at a given measurement height h, and *fcₖ* are 2 first coefficients at the measurement height.

In some examples, fitting the second polynomial to each of the coefficients fck, provides obtaining 2 second coefficients, sck, expressed as $; {sc}_{1} = {\sum }_{j = 0}^{M} {x}_{1 j} {h}^{j} ; {sc}_{0} = {\sum }_{j = 0}^{M} {x}_{0 j} {h}^{j}$

In some examples, using a high degree of polynomial overfits the data. In some examples, using a low degree underfits the data so a compromise may be found, and an optimum value of a degree may be implemented. The optimum value may be obtained by empirical methods or by statistical models or by artificial intelligence.

In some examples, the values or categories of atmospheric stability are stable, unstable, and neutral. The atmospheric stability values or categories may be obtained by a controller, by for example, comparing air temperature versus sea water temperature at a predefined depth of every 10 minutes, for coherence with the rest of the measurements for calculating or obtaining the turbulence intensity TI. Comparing air temperature versus sea water temperature may comprise subtracting Tair-Twater and provide a value. Other methodologies to obtain an atmospheric stability may comprise obtaining the "Richardson number" or may further comprise obtaining the "Obukhov length". The Richardson number, Ri, may be defined as a dimensionless ratio of buoyant suppression of turbulence to shear generation of turbulence depending on the acceleration of gravity, β a representative vertical convective stability, commonly ∂θ/∂z*,* where θ is potential temperature, and the change of wind speed with height is a characteristic vertical shear of the wind. The Richardson number may be used as a dynamic stability measure to determine if turbulence will exist. The Richardson number is a component of the Graphical Turbulence Guidance product available on the U.S. National Oceanic and Atmospheric Administration (NOAA). The Obukhov length, typically of order one to tens of meters, is positive for stable stratification and negative for unstable stratification and approaches 0 in the limit of neutral stratification.

In some examples, the method 200 to generate obtaining ANEMO_TI values, is implemented by obtaining ANEMO_wind speed values from two or more wind speed sensors at corresponding different measurement heights, h1, h2, h3, each of the wind speed sensors, or anemos 14, 15, 16 mounted on a corresponding measurement height. In such examples, classifying into wind speed ranges, grouping into wind speed ranges and dividing each of the average av_ANEMO_TI values into each of the corresponding average av_LIDAR_TI values per wind speed range, is further performed per each corresponding different measurement height, h1, h2, h3; and the method further comprises generating a correction model based on the series of ratios av_ANEMO_TI/av_LIDAR_TI per wind speed range and further based on the measurement heights.

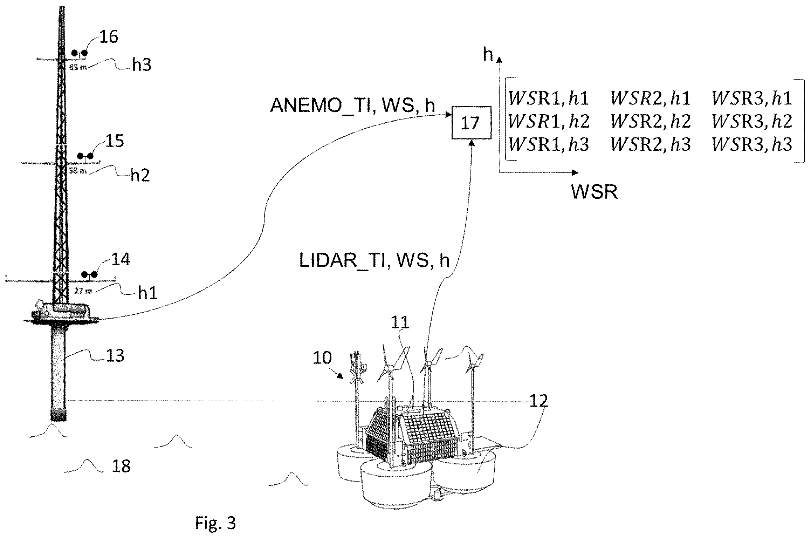

Figure 3 shows an abstract and conceptual interpretation of a model, not forming part of the claims, generated according to the method 200 based on the series of ratios av_ANEMO_TI/av_LIDAR_TI per wind speed range WSR and further based on the measurement heights h1, h2, h3. As seen in figure 3, the controller 17 of the measurement system 10 is provided with values of TI both from the anemometers in the meteorological mast 13 and from the LiDAR 11. Such TI values are associated, in figure 3, to a wind speed WS, or mean WS in 10 minutes, and to a measurement height which may be h1, h2 or h3. The method 200 of the present disclosure, in the example shown in figure 3, generates a model based on the ratios av_ANEMO_TI/av_LIDAR_TI per wind speed range and further based on the measurement heights h1, h2, h3. The model generated in the example of figure 3 is a set of correction factors per wind speed range WSR and per height h, as represented in the two-dimensional graphics.

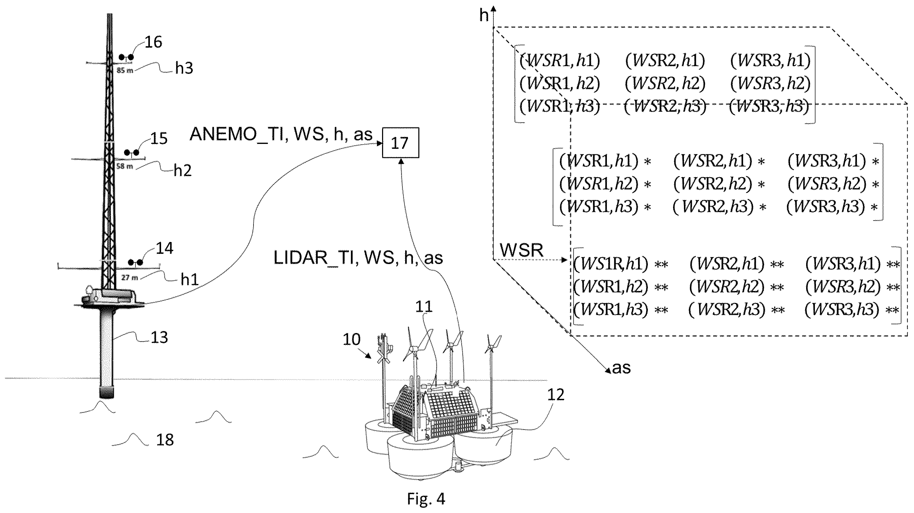

Figure 4 shows an abstract and conceptual interpretation of a model generated not forming part of the claims, based on the series of ratios av_ANEMO_TI/av_LIDAR_TI per wind speed range WSR and further based on the measurement heights h1, h2, h3 and further based on the atmospheric stability, "as". As seen in figure 4, the controller 17 of the measurement system 10 is provided with values of TI both from the anemometers in the meteorological mast 13 and from the LiDAR 11, for different categories or values of "as". Such TI values are associated, in figure 4, to a wind speed WS, or mean WS in 10 minutes, and to a measurement height which may be h1, h2 or h3. The method 200 of the present disclosure, in the example shown in figure 4, generates a model based on the ratios av_ANEMO_TI/av_LIDAR_TI per wind speed range and further based on the measurement heights h1, h2, h3 and further based on the. The model generated in the example of figure 4 is a set of correction factors per wind speed range WSR, per height h, and per as, as represented in the three-dimensional graphics.

A Sea State factor may be composed by, at least, three parameters: Hs: Significant wave height; Ts: Significant wave period; MWD: mean wave direction.

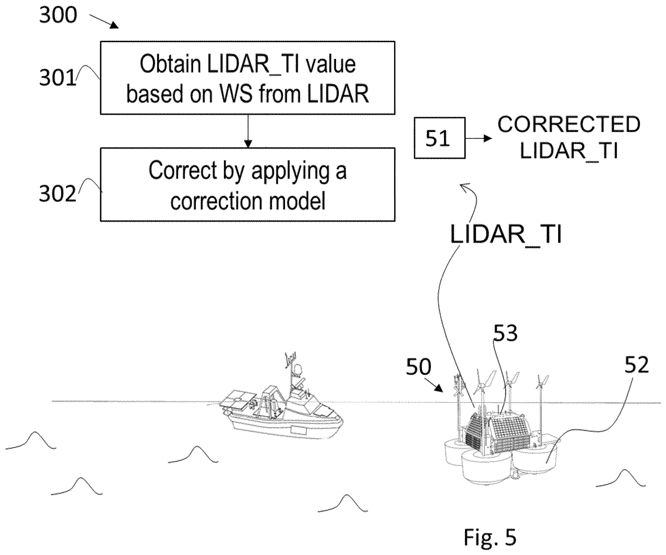

Figure 5 shows an example implementation of a measurement system 50, not forming part of the claims, with a controller 51, wherein the controller 51 is configured to implement a method 300, not forming part of the claims, to correct a turbulence intensity TI value, LIDAR_TI. The controller 51 is configured to obtain 301 the LIDAR_TI value based on wind speeds measured by the LIDAR 53 mounted on the floating platform 52; and to correct 302 the LIDAR_TI value by applying a correction model obtained by any one of the methods of the present disclosure. In some examples the controller 51 is configured to obtain a value of atmospheric stability; and wherein correcting the LIDAR_TI value is performed applying the correction model for the value of the corresponding atmospheric stability.

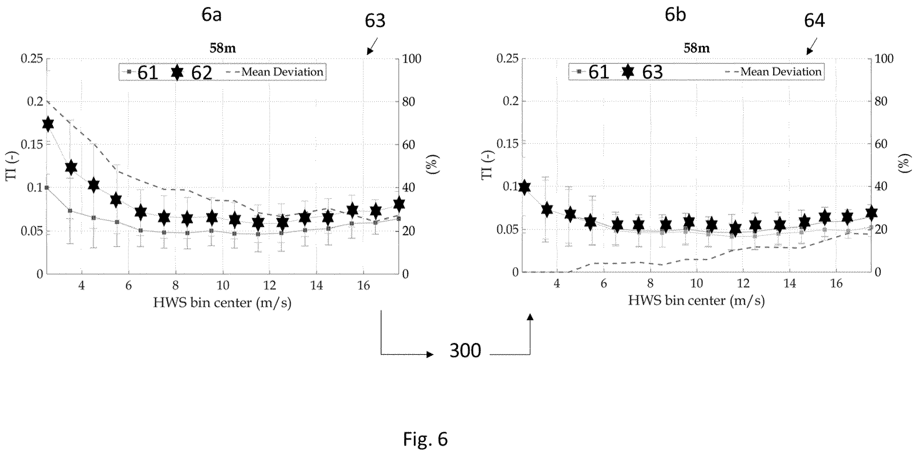

Figure 6 shows two representations of values of LIDAR_TI and ANEMO_TI and the corresponding mean deviation measured based on wind speeds at 58m height. The representation 6a shows values of LIDAR_TI to be corrected 62 and values of ANEMO_TI 61, by each of the horizontal wind speed bins represented in the figure and centred at the bin centres represented in the figure. The representation 6b shows values of corrected LIDAR_TI 6 and values of ANEMO_TI 61, by each of the horizontal wind speed bins represented in the figure and centred at the bin centres represented in the figure 6. As shown, once the method 300, not forming part of the claims, is applied, the corrected LIDAR_TI is substantially the same as the ANEMO_TI. These results show that a correction model generated by the statistical method correct the TI values based on LIDAR wind measurements to obtain TI values corresponding to TI values based on wind speeds measured by an anemometer.

The examples shown, not forming part of the claims, allow implementing a statistical modelling or machine learning framework to correct the FLS-measured TI values and thus perform a direct comparison with the TI values coming from a fixed meteorological mast, MM. The models may be extensively trained on a high volume of data gathered by floating LIDARs at different validations sites for several months. The data gathered may not be restricted to wind speed and direction only, but it may rather extend to atmospheric and/or sea state measures or variables as well. Moreover, the values of the same wind variables coming from MM are also fed into the model during the training phase. The trained model may therefore take as input several atmospheric and sea state measures on top of wind variables, which may be used as a continuous multi-dimensional data stream to correct the FLS TI values. A correction model may output a corrected 10-minute data stream for the FLS TI, which is then compared with the reference data stream coming from a fixed MM. The improvement in the Mean Absolute Percentage Error (MAPE) between FLS and MM TI values before and after the correction is significant, and can range between 30% and 50%, depending on the level of fine-tuning of the model. The statistical model has also the flexibility to be applied from general cases where less data is available to more fined-tuned instances depending on a richer data source as well as different geographical locations.

A controller, not forming part of the claims, is configured to perform any one of the methods of the examples above, not forming part of the claims. The controller may be configured to receive data from a communications module installed in the floating LIDAR. The instructions may alternatively be received by a communications module from a remote platform or from a cloud and may be sent to the controller.

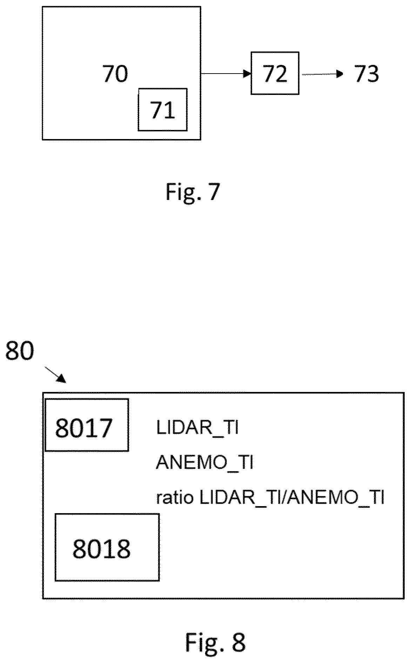

In figure 7 the system 70, not forming part of the claims, comprises a non- transitory readable storage medium 71 storing a model obtained by any one of the methods of the examples not forming part of the claims, and/or instructions which, when performed by a processor, cause the processor 72 to perform any one of the methods of the examples not forming part of the claims. For example, the instructions may cause the processor 72 to obtain LIDAR_TI values; to obtain ANEMO_TI values; to classify the wind speeds into wind speed ranges; to group the LIDAR_TI values and the ANEMO_TI values per corresponding wind speed ranges to obtain groups of ANEMO_TI values and groups of LIDAR_TI values at each wind speed range; to average the ANEMO_TI values and the LIDAR_TI values of each of the groups; to divide each of the average av_ANEMO_TI values into each of the corresponding average av_LIDAR_TI values; to obtain a series of ratios av_ANEMO_TI / av_LIDAR_TI per wind speed range. The processor 72 provides an output 73 comprising a correction model based on the series of ratios av_ANEMO_TI/av_LIDAR_TI per wind speed. In other or the same example, the non- transitory readable storage medium 71 may store a correction model obtained by the methods of the examples not forming part of the claims, and instructions which, when performed by the processor 72, cause the processor to obtain a LIDAR_TI value from a LIDAR mounted on a floating platform and to provide an output 73 comprising a corrected version of the LIDAR_TI value by applying the stored correction model in the medium 71.

In other examples, the system 70 may comprise the processor 72.

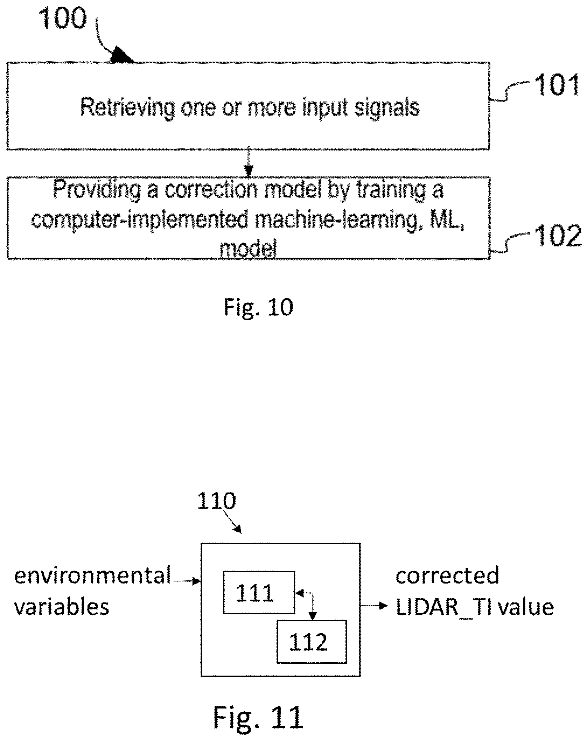

Figure 8 represents a system 80 for providing a correction model to correct a TI value according to the present disclosure and claims. The system comprises a processor or controller 8017; and a non-transitory computer readable storage media 8018 in communication with the processor, and storing instructions code which, when executed by the processor, causes the processor to perform the steps of a method for providing a correction model to correct a TI. The steps of a method for providing a correction model to correct a TI are represented in figure 10.

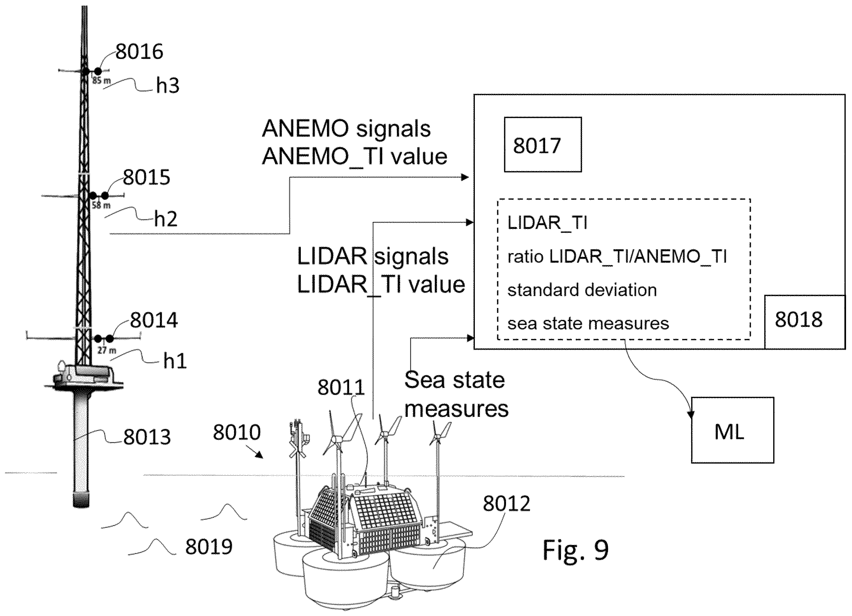

Figure 9 schematically represents a non-limiting example of a system, according to the present disclosure and claims, on the sea surface. The system of the figure 9, compared to the example of figure 8, further comprises a floating system 8010 comprising a floating platform 8012 and a floating LIDAR 8011. As seen in figure 9, the example system further comprises a meteorological mast 8013 with anemometers 8014, 8015, 8016 at different measurement heights h1, h2, h3. The anemometers may provide the system 80 with parameters measured by the anemometers, such as the wind speeds measured by the anemometers at the different measurement heights. The processor, by implementing the method for providing a correction model, obtains ANEMO_TI and LIDAR_TI values per corresponding heights the standard deviation of horizontal wind speed at the one or more measurement heights measured by the floating LIDAR and one or more sea state measures obtained by a sea state sensor system as explained below.

The processor or controller 8017, by implementing a method for providing a correction model, retrieves, as input signals, a LIDAR-based turbulence intensity value, LIDAR_TI value, based on wind speeds measured by the floating LIDAR 8011 at one or more measurement heights; at least an anemometer-based turbulence intensity value, ANEMO_TI value, based on wind speeds measured by at least one anemometer 8014, 8015, 8016 mounted on the meteorological mast 8013, at the one or more measurement heights h1, h2, h3; a standard deviation of horizontal wind speed at the one or more measurement heights measured by the floating LIDAR 8011; and sea state measures, the sea state measures comprising one or more of: wave measures; Significant wave height; Significant wave period;; mean wave direction, , and Sea Water Temperature. In some examples, the sea state measures may comprise salinity measures.

The input signals may further comprise received features measured by the floating LIDAR 8011, or secondary or computed variables which may be pre-processed retrieved signals. The input signals, in some examples, comprise one or more of (i) measurement heights, for example in meters, and for example relative to the floating LIDAR 8011 floating on the sea; (ii) sea state measures; (iii) site complexity measures; (iv) measures relative to the interaction sea-atmosphere; (v) global measures; (vi) wind measures; and (vii) timestamp measures.

The (ii) sea state measures may comprise one or more of: (a) wave measures obtained from a wave sensor, for example an inertial motion unit (IMU); (b) significant wave height, for example in m, measured by the floating LIDAR or by a radar altimeter, for the horizontal speed which may comprise a wave spectral analysis, wherein significant comprises the average of the highest third in a period of time, for example in 20 minutes; (c) significant wave period for example in seconds, s, measured by the floating LIDAR or by an accelerometer or an apparatus based on microwave radar technology; (d) MWD -mean wave direction- obtained by the floating LIDAR or by a wave sensor; and (e) sea water temperature for example in degree Celsius obtained by a temperature sensor or thermometer. The sea state measures may, as seen, be obtained by a sea state sensor system including one or more of: the floating LIDAR, IMU, accelerometer, radar, salinity meter, wave sensor and temperature sensor. The sea state measures may additionally comprise salinity measures. The salinity measures may be obtained by a salinity meter.

The (iii) site complexity measures may comprise one or more of (g) Distance-to-shore, for example in meters, m, which may be obtained from a GPS position of the floating platform 8012 obtained by a GPS; and (h) bathymetry measures obtained by a bathymeter. The (iii) site complexity measures may be obtained, as seen, by a site complexity sensor system comprising or more of: global positioning system - GPS-, and bathymeter.

The (iv) measures relative to the interaction sea-atmosphere may comprise one or more of (j) vertical wind; (k) atmospheric stability; (m) alignment wind-direction-to-shore; and (n) wind-wave misalignment. The (iv) measures relative to the interaction sea-atmosphere may be obtained by an interaction sea-atmosphere sensor system comprising one or more of: the floating LIDAR, thermometer, and a processor configured to compute one or more of the measures relative to the interaction sea-atmosphere.

The (v) global measures may comprise one or more of: (o) Air Temperature for example in degree Celsius obtained by a temperature sensor or thermometer; and (p) difference between the air temperature and water temperature. The (v) global measures may be obtained by a thermometer.

The (vi) wind measures may be obtained by the floating LIDAR and may comprise one or more of: (q) Average Horizontal Wind Speed (HWS), for example in meter per second or m/s, Minimum HWS for example in m/s, (r) standard deviation of HWS for example in m/s, (s) Maximum HWS for example in m/s, (t) Wind Direction for example in a number between 0 and 360 degrees with respect to the North, the degrees for example increasing in a clockwise direction or decreasing in a clockwise direction, (u) Atmospheric Pressure for example in hPa; and (w) LIDAR_TI values computed as the ratio between the standard deviation and the mean values of the wind speed measured by the floating LIDAR over a period of ten minutes.

The (vii) timestamp measures may comprise one or more of: minute; which may be a value from 1 to 60; hour, which may be a value from 1 to 24; day of the week, which may be a value from 1 to 7; day of the month which may be a value from 1 to 31; and day of the year which may be a value from 1 to 366. The (vii) timestamp measures may be obtained by any processing means or by a Time Stamp Counter (TSC).,

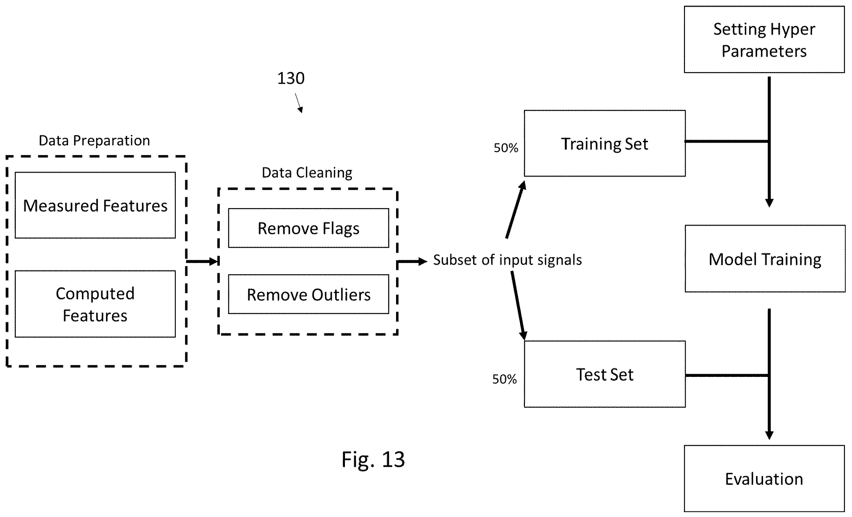

The processor or controller 8017 by implementing a method for providing a correction model, may pre-process some of the retrieved input signals. The preprocessing may comprise computing or retrieving secondary or computed variables or parameters or signals from the received measured features or retrieved input signals from the floating LIDAR 8011. The secondary or computed variables may comprise one or more of the following computed signals: Difference between the Air Temperature and Water Temperature, which may be used for indicating an atmospheric stability to the method of the disclosure, LIDAR_TI values which may be computed as the ratio between the standard deviation and the mean values of the wind speed measured by the floating LIDAR over a period of ten minutes; minute, which may be a value from 1 to 60, hour, which may be a value from 1 to 24, day of the week, which may be a value from 1 to 7, day of the month which may be a value from 1 to 31, day of the year which may be a value from 1 to 366, wherein minute, hour, day of the week, day of the year, and month may be obtained from a timestamp value obtained from the floating LIDAR; Distance-to-shore, for example in meters, m, which may be obtained from a GPS position of the floating platform 8012, "wind direction-to-shore alignment" parameter comprising horizontal and vertical components respect a shore-direction alignment, which may be obtained as a vectorial product between a wind direction vector and a shore alignment vector, wherein, if both vectors are aligned then the value is -1 or +1 and when the vectors are orthogonal the product gives 0. Distance-to-shore and "wind direction-to-shore alignment" parameter allow the model to differentiate between near shore and offshore cases more easily. As seen, the retrieved input signals are numerical variables. Encoding may be needed in examples where some parameters may be categorical, for example. In other words, retrieving input signals may comprise a data preparation including, as represented in figure 13, receiving or obtaining measured features and computing computed features.

The method for providing a correction model comprises inputting, as subset of the input signals, a LIDAR_TI value at the one or more measurement heights, the standard deviation of horizontal wind speed at the one or more measurement heights measured by the floating LIDAR, the one or more sea state measures and the ratio LIDAR_TI/ANEMO_TI per corresponding heights, to the machine learning model, ML model. The ML model may or not be comprised in the storage media 8018. The ML model is accessible by the processor 8017. The ML model is trained in a supervised manner using training variables to map the subset of the input signals to a corresponding ratio LIDAR_TI/ANEMO_TI value, wherein the training variables comprise the subset of the input signals and a corresponding ground-truth ratio LIDAR_TI/ANEMO_TI value per each of the one or more measurement heights. Once the ML model is trained, the correction model is provided, such that a measured LIDAR_TI value can be corrected using the correction model. The retrieved input signals may have been obtained in measurement campaigns in the sea, for example, the North sea. The retrieved input signals may have been obtained from different databases.

Retrieved input signals may comprise data gathered in measurement campaigns or from databases. From such retrieved input signals, some parameters may be excluded or cleaned in a process which may be referred to as Data Cleaning including removing flags and removing outliers, as represented in figure 13. Outliers may be removed, which may comprise values providing a ratio LIDAR_TI/ANEMO_TI or ratio ANEMO_TI/LIDAR_TI greater than 10. In examples, 50 values of ratio LIDAR_TI/ANEMO_TI have been excluded over 500.000 values. The outlier values may be originated due to coming from specific wind sectors in which the wind variables may be affected by external or specific conditions, such as the presence of other external systems affecting the wind direction or others, for example, offshore wind farms. In some examples, data corresponding to a wind direction in the range [30°, 151°] have been discarded, since an external-nearby wind farm is positioned in such direction with respect to the floating platform used for gathering the retrieved input signals. The training signals to input to the ML model may therefore comprise a subset of the retrieved input signals, comprising the retrieved input signals without the outliers or excluded data. In other or the same examples, other data may be excluded such as the flagged measured and NaN values. Flags may be excluded because of their high value or values which may not have physical sense.

In cases where the available data for training is not complete, techniques to fill missing data may be implemented. For example, data with time granularity greater than 10 minutes may be flat interpolated stepwise constant.

The set of input signals may be used for training in the following manner: a 70% may be used as training set, a 15 % may be used as validation set and a 15% may be used as test set. In other examples, as represented in figure 13, a 50% may be used as training set, and the other 50 % may be used as validation set.

For training the ML model, example regression models may be used, including linear regression, random forest (RF), neural networks (NN), Gradient Boosting (GB), among which RF, NN and GB yielded the best results. Preferred embodiments implement GB and RF since prior scaling of variables may be avoided and provide interpretable results when compared to Neural Networks, while being less CPU/GPU intensive. Gradient boosting is significantly faster than RF with comparable accuracy, hence hyperparameters can be tuned more easily thus providing the best performance overall.

An example library which may be used is LightGBM (developed by Microsoft) which allows for both CPU parallelization and GPU acceleration while providing several tools to control overfitting. In particular, the following hyperparameters are found to be particularly effective compared to other: number of estimators, learning rate and column subsampling.

In examples where a Gradient boosting model is trained, three elements are involved: a loss function to be optimized, a weak learner to make predictions and an additive model to add weak learners to minimize the loss function.

Regarding the loss function to be optimized, or optimization criterion, a Mean Squared Error, MSE, may be used, with evaluation metric one with parameters such as of the following str, callable, list or None, optional (default=None). If str is used, a built-in evaluation metric may be used. If callable is used, a custom evaluation metric may be used. If list is used, a list of built-in metrics, or a list of custom evaluation metrics, or a mix of both may be used. By default, a 'I2' may be used for LGBMRegressor, 'logloss' may be used for LGBMClassifier, and 'ndcg' may be used for LGBMRanker.

Regarding the weak learner to make predictions, a regression tree with a maximum of 31 leaves, with unbounded maximum tree depth and a minimum of 20 samples required to split an internal node may be implemented.

Regarding the additive model to add weak learners to minimize the loss function, a Gradient boosting algorithm with 10000 estimators, learning rate of 0.1 and a column subsample ratio of 0.8 may be implemented.

Hyperparameters may be tuned. Example variations of hyperparameters may comprise:
- Number of trees or estimators: [min=1000, max=10000, step=500] which provides 20 variations or configurations;
- Learning rate: [min=0.02, max=0.3, step=0.02]); which provides 15 variations or configurations;
- column subsampling also referred to as "colsample_bytree": [min=0.1, max=1, step=0.1]; which provides 10 variations or configurations.

A total number of configurations explored may therefore comprise 3000 variations or configurations. A preferred configuration comprises 10000 estimators, a learning rate of 0.1 and a column subsampling of 0.9.

A batch learning may be implemented, comprising inputting the training variables in batch to the ML model.

The training phase of the ML Gradient Boosting may, therefore, comprise:
- Input training variables comprising at least a subset of measured variables from the LIDAR and from the Anemometers, and at least a subset computed secondary variables;
- Target Variable: $current Ratio = \frac{{TI}_{ANEMO}}{{TI}_{LIDAR}}$; with *current Ratio* the ratio obtained with the measured variables, *TI_{LIDAR}* obtained from the measured variables by the floating LIDAR; and *TI_{ANEMO}* obtained from the measured variables by the fixed anemometer(s) in the meteorological mast.
- Optimization: Mean Squared Error (MSE); and
- Output Variable: corrected *Ratio,* provided by the trained ML model or correction model.

The analysis or evaluation of the trained ML model may be evaluated by root squared error. The evaluation may comprise analyzing the following parameters:
- Correction: ${TI}_{LIDAR}^{correct} = {Ratio}_{corrected} * {TI}_{LIDAR}$;
- Error: $RMSE \left({TI}_{LIDAR}^{correct}, {TI}_{ANEMO}\right)$;
- Performance: $100 ∗ \left[1-\frac{RMSE \left({TI}_{LIDAR}^{correct}, {TI}_{ANEMO}\right)}{RMSE \left({TI}_{LIDAR}, {TI}_{ANEMO}\right)}\right]$.

The presented evaluation metrics and performance, when used for the results obtained with the statistical model and compared to the performance provided by the correction model provided by the methods claimed, show that the claimed methods and systems provide a better accuracy of ratio TI than the statistical approach. In particular, the statistical approach provides a performance of 20-30% whereas the correction model provided by the claimed methods, using Gradient Boosting provides a performance of 60-70%.

The sensitivity of the correction model provided by the claimed methods and systems is higher than correction models provided by statistical methods. For example, the correction model provided by the claimed methods allows obtaining ratio TI for heights which have never been used for training.

Computationally, the comparison between implementing statistical methods and implementing the claimed methods and systems shows that the statistical method takes about the same time as ML, but with ML a more intensive training at the same time may be performed because CPU parallelization and GPU acceleration are allowed. These facts allow an improvement of performance when the methods are specifically implemented in a cloud.

Figure 10 shows an example of a method 100 for providing a correction model to correct a TI value according to the present disclosure. The method comprises, in block 101, retrieving one or more input signals, the input signals comprising at least a LIDAR-based turbulence intensity value, LIDAR_TI value, based on wind speeds measured by a floating LIDAR at one or more measurement heights; at least an anemometer-based turbulence intensity value, ANEMO_TI value, based on wind speeds measured by at least one anemometer mounted on a meteorological mast, at the one or more measurement heights; a standard deviation of horizontal wind speed measured by the floating LIDAR at the one or more measurement heights and sea state measures. The method further comprises, in block 102, providing a correction model by training a computer-implemented machine-learning, ML, model, in a supervised manner using training variables to map a subset of the input signals to a corresponding ratio LIDAR_TI/ANEMO_TI value, wherein the training variables comprise the subset of the input signals and a corresponding ground-truth ratio LIDAR_TI/ANEMO_TI value per each of the one or more measurement heights; the subset of the input signals comprising at least the standard deviation of horizontal wind speed at the one or more measurement heights, the LIDAR_TI value and the sea state measures.

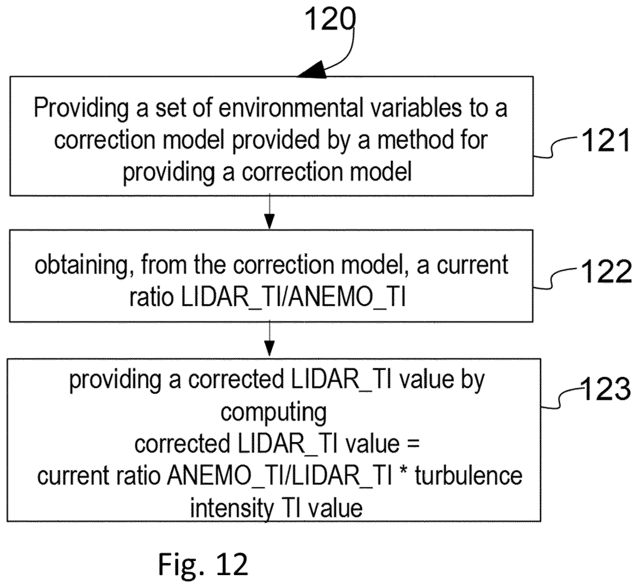

Figure 11 shows an example system 110 to correct a turbulence intensity TI value, or LIDAR_TI value, according to the present disclosure, the system comprising a correcting processor 111; and a non-transitory computer readable media 112 in communication with the correcting processor, and storing instructions code which, when executed by the processor, causes the processor to perform the steps of a method to correct a TI value as illustrated in figure 12.

Figure 12 represents block diagrams representing steps of a method 120 to correct a TI value, LIDAR_TI value, according to the present disclosure, the method comprising, in block 121, providing a set of environmental variables to a correction model provided by a method for providing a correction model according to the disclosure, the set of environmental variables comprising at least a current standard deviation of horizontal wind speed measured by the floating LIDAR at the one or more measurement heights; a LIDAR_TI value at the one or more measurement heights, and the one or more sea state measures. The method 120 comprises, in block 122, obtaining, from the correction model, a current ratio LIDAR_TI/ANEMO_TI per each of the one or more measurement heights. The method 120 further comprises, in block 123, providing a corrected LIDAR_TI value by computing the multiplication of the ratio ANEMO_TI/LIDAR_TI times the turbulence intensity TI value, such that corrected LIDAR_TI value = current ratio ANEMO_TI/LIDAR_TI * turbulence intensity TI value.

Figure 13 represents an example representation of a method 130 for providing a correction model of the disclosure. The method 130 comprises data preparation including receiving or obtaining measured features and computing computed features, as explained above. The method 130 further comprises data Cleaning including removing flags and removing outliers, as explained above. The method 130 further comprises splitting the remaining data in a 50% for training set, and the other 50 % for test set. The method 130 further comprises setting hyper Parameters, as explained above. The method 130 further comprises training the ML model and finally an evaluation process, which may comprise an analysis or evaluation of the trained ML model by root squared error, as explained above.

Providing the ratio LIDAR_TI/ANEMO_TI to the ML model as a target yields a consistent improvement when compared to cases in which other targets are used as target. When compared to the statistical models shown in other examples of the disclosure and represented in figures 1 to 7, the method according to the present disclosure provides better results.

The controllers of the present disclosure may comprise or may be implemented by electronic means, computing means or a combination of them, that is, electronic or computing means may be used interchangeably so that a part of the described means may be electronic means and the other part may be computing means, or all described means may be electronic means or all described means may be computing means. Examples of a controller comprising electronic means may comprise a programmable electronic device such as a Complex Programmable Logic Device, CPLD, a Field Programmable Gate Array, FPGA or an Application-Specific Integrated Circuit, ASIC.

Examples of a controller comprising computing means may comprise a computer system, which may comprise a memory and a processor, the memory being adapted to store a set of computer program instructions, and the processor being adapted to execute these instructions stored in the memory or non-transitory readable storage medium. The memory may be comprised in the processor, for example an EEPROM, or may be external, for example, data storage means such as magnetic disks, e.g., hard disks, optical disks, e.g., DVD or CD, memory cards, flash memory, e.g., pen drives, or solid-state drives, SSD based on RAM, based on flash, etc. A set of computer program instructions may be executable by the processor, such as a computer program, may be stored in a physical storage means, or may be carried by a carrier wave, or by a carrier medium. The controller can be any entity or device capable of carrying the program, such as electrical or optical, which can be transmitted via electrical or optical cable or by radio or other means.

The computer program may be in the form of source code, object code, a code intermediate source and object code such as in partially compiled form, or in any other form suitable for use in the implementation of the method. The carrier may be any entity or device capable of carrying the computer program.

The computer program may be embodied on a storage medium (for example, a CD-ROM, a DVD, a USB drive, a computer memory or a read-only memory) or carried on a carrier signal (for example, on an electrical or optical carrier signal).

## Claims

1. A computer-implemented method to correct a turbulence intensity value, TI value, the method comprising:
- providing a correction model to correct a turbulence intensity value, wherein the correction model is obtained by:
- retrieving input signals, the input signals comprising at least:
- a LIDAR-based turbulence intensity value, LIDAR_TI value, based on wind speeds measured by a floating LIDAR at a plurality of measurement heights;
- at least an anemometer-based turbulence intensity value, ANEMO_TI value, based on wind speeds measured by anemometers mounted on a meteorological mast, at the plurality of measurement heights;
- a standard deviation of horizontal wind speed at the plurality of measurement heights measured by the floating LIDAR; and
- sea state measures comprising one or more of: wave measures; significant wave height; significant wave period; mean wave direction, and sea water temperature;
- training a computer-implemented machine-learning, ML, model, in a supervised manner using training variables to map at least a subset of the input signals to a corresponding ratio LIDAR_TI/ANEMO_TI value, wherein the training variables comprise the at least a subset of the input signals and a corresponding result ratio LIDAR_TI/ANEMO_TI value per each one of the plurality of measurement heights; the at least a subset of the input signals comprising at least a LIDAR_TI value at the plurality of measurement heights, the standard deviation of horizontal wind speed at plurality of measurement heights measured by the floating LIDAR, and the one or more sea state measures;
- providing a set of environmental variables to the correction model, the set of environmental variables comprising at least a LIDAR_TI value at one or more measurement heights, a standard deviation of horizontal wind speed at the measurement heights measured by the floating LIDAR, and sea state measures;
- obtaining, from the correction model, a current ratio LIDAR_TI/ANEMO_TI per each of the one or more measurement heights; and
- providing a corrected LIDAR_TI value per each one or more measurement heights by computing the multiplication of the current ratio per each of the one or more measurement heights and the LIDAR TI value, such that the corrected LIDAR_TI value equals the multiplication operation of the current ratio ANEMO_TI/LIDAR_TI * LIDAR TI value.

2. The computer-implemented method of claim 1, wherein retrieving the input signals of the correction model comprises:
- receiving the wind speeds measured by the floating LIDAR from the floating LIDAR;
- obtaining the at least a LIDAR_TI value based on the wind speeds received from the floating LIDAR;
- receiving the wind speeds measured by at the least one anemometer mounted on a meteorological mast at the one or more measurement heights from the at least one anemometer; and
- obtaining the at least an ANEMO_TI value based on the wind speeds received from the at least an anemometer.

3. The computer-implemented method of claim 1, wherein retrieving the input signals of the correction model comprises:
- receiving the wind speeds measured by the floating LIDAR from a first database;
- obtaining the at least a LIDAR_TI value based on the wind speeds received from a second database;
- receiving the wind speeds measured by at the least one anemometer mounted on a meteorological mast from a third database; and
- obtaining the at least an ANEMO_TI value based on the wind speeds received from a fourth database;
- wherein the first, second, third and fourth database are the same or different databases.

4. The computer-implemented method of any of claims 1 to 3, wherein retrieving the LIDAR_TI value based on wind speeds measured by the floating LIDAR of the correction model is performed by computing a ratio between the standard deviation of the wind speeds measured by the floating LIDAR and the mean values of the corresponding wind speeds measured by the floating LIDAR over a period of time.

5. The computer-implemented method of any of claims 1 - 4, wherein retrieving the at least an ANEMO_TI value based on the wind speeds measured by the at least one anemometer of the correction model is performed by computing a ratio between the standard deviation of the wind speeds measured by the at least one anemometer and the mean values of the corresponding wind speeds measured by the at least one anemometer over the period of time.

6. The computer-implemented method of any of claims 1 to 5, wherein the correction model is further obtained by providing the subset of the input signals by either one or both of:
- selecting one or more of the retrieved input signals; and
- computing or retrieving one or more secondary signals from the retrieved input signals.

7. The computer-implemented method of any of claims 1 to 6, wherein the ML model is a gradient boosting ML model.

8. The computer-implemented method according to any of claims 1 - 7, wherein the sea state measures of the correction model comprise wave measures; significant wave height; significant wave period; salinity measures; mean wave direction, and sea water temperature.

9. The computer-implemented method according to any of claims 1 - 7, wherein the sea states of the correction model comprise significant wave height, significant wave period, and mean wave direction.

10. A computer program product comprising instructions which, when the program is executed by a computer, cause the computer to carry out the steps of a method according to claims 1 to 9.

11. A system to correct a turbulence intensity TI value, the system comprising:
- a processor; and
- a non-transitory computer readable media in communication with the processor, and storing instructions code which, when executed by the processor, causes the processor to perform the steps of a method of any of claims 1 - 9.

12. The system of claim 11, wherein the non-transitory computer readable media is configured to store the correction model once the ML model has been trained in a supervised manner using training variables to map a subset of input signals to a corresponding ratio LIDAR_TI/ANEMO_TI value, wherein the training variables comprises the subset of input signals and a corresponding ground-truth ratio LIDAR_TI/ANEMO_TI value per each of the plurality of measurement heights; the subset of the input signals comprising at least the LIDAR_TI value at the plurality of measurement heights, a standard deviation of horizontal wind speed at the plurality of measurement heights measured by the floating LIDAR, and the sea state measures.

13. The system according to any of claims 11 to 12, further comprising a floating LIDAR mounted on a floating platform.

14. The system according to claim 13, wherein the floating LIDAR is configured to measure significant wave height, significant wave period, and mean wave direction.

15. A non- transitory readable storage medium storing:
- instructions which, when performed by a processor, cause the processor to perform any one of the methods of claims 1 to 9.

## Patentansprüche

1. Ein computerimplementiertes Verfahren zur Korrektur eines Turbulenzintensitätswerts (TI-Wert), wobei das Verfahren umfasst:
- Bereitstellen eines Korrekturmodells zur Korrektur eines Turbulenzintensitätswerts, wobei das Korrekturmodell erhalten wird durch:
- Abrufen von Eingangssignalen, wobei die Eingangssignale mindestens Folgendes umfassen:
- einen LIDAR-basierten Turbulenzintensitätswert, LIDAR_TI-Wert, basierend auf Windgeschwindigkeiten, die von einem schwimmenden LIDAR in einer Vielzahl von Messhöhen gemessen wurden;
- mindestens einen anemometerbasierten Turbulenzintensitätswert (ANEMO_TI-Wert), der auf Windgeschwindigkeiten basiert, die von an einem meteorologischen Mast montierten Anemometern in den mehreren Messhöhen gemessen wurden;
- eine Standardabweichung der horizontalen Windgeschwindigkeit in den mehreren Messhöhen, gemessen durch den schwimmenden LIDAR; und
- Meereszustandsgrößen, die eine oder mehrere der folgenden Größen umfassen: Wellenparameter; signifikante Wellenhöhe; signifikante Wellenperiode; mittlere Wellenrichtung und Meerwassertemperatur;
- das überwachte Trainieren eines computerimplementierten Modells für maschinelles Lernen (ML) unter Verwendung von Trainingsvariablen, um mindestens eine Teilmenge der Eingangssignale einem entsprechenden Verhältniswert LIDAR_TI/ANEMO_TI zuzuordnen, wobei die Trainingsvariablen die mindestens eine Teilmenge der Eingangssignale und einen entsprechenden Ergebnis-Verhältniswert LIDAR_TI/ANEMO_TI für jede der mehreren Messhöhen umfassen; wobei die mindestens eine Teilmenge der Eingangssignale mindestens einen LIDAR_TI-Wert bei den mehreren Messhöhen, die Standardabweichung der horizontalen Windgeschwindigkeit bei den mehreren Messhöhen, gemessen durch den schwimmenden LIDAR, und die eine oder mehrere Meereszustandsgrößen umfasst;
- Bereitstellen eines Satzes von Umgebungsvariablen für das Korrekturmodell, wobei der Satz von Umgebungsvariablen mindestens einen LIDAR_TI-Wert bei einer oder mehreren Messhöhen, eine vom schwimmenden LIDAR gemessene Standardabweichung der horizontalen Windgeschwindigkeit bei den Messhöhen sowie Meereszustandsgrößen umfasst;
- Ermitteln eines aktuellen Verhältniswertes LIDAR_TI/ANEMO_TI für jede der einen oder mehreren Messhöhen aus dem Korrekturmodell; und
- Bereitstellen eines korrigierten LIDAR_TI-Werts für jede der einen oder mehreren Messhöhen durch Berechnung des Produkts aus dem aktuellen Verhältniswert für jede der einen oder mehreren Messhöhen und dem LIDAR-TI-Wert, sodass der korrigierte LIDAR_TI-Wert dem Produkt aus dem aktuellen Verhältniswert ANEMO_TI/LIDAR_TI und dem LIDAR-TI-Wert entspricht.

2. Das computerimplementierte Verfahren nach Anspruch 1, wobei das Abrufen der Eingangssignale des Korrekturmodells folgendes umfasst:
- Empfangen der vom schwimmenden LIDAR gemessenen Windgeschwindigkeiten vom schwimmenden LIDAR;
- Ermitteln mindestens eines LIDAR_TI-Werts auf der Grundlage der vom schwimmenden LIDAR empfangenen Windgeschwindigkeiten;
- Empfangen der Windgeschwindigkeiten, die von mindestens einem an einem Wettermast in der einen oder mehreren Messhöhen montierten Anemometer gemessen wurden; und
- Ermitteln des mindestens einen ANEMO_TI-Werts auf der Grundlage der von dem mindestens einen Anemometer empfangenen Windgeschwindigkeiten.

3. Das computerimplementierte Verfahren nach Anspruch 1, wobei das Abrufen der Eingangssignale des Korrekturmodells umfasst:
- Empfangen der vom schwimmenden LIDAR gemessenen Windgeschwindigkeiten aus einer ersten Datenbank;
- Ermitteln des mindestens einen LIDAR_TI-Werts auf der Grundlage der Windgeschwindigkeiten, die aus einer zweiten Datenbank empfangen wurden;
- Empfangen der von mindestens einem an einem Wettermast montierten Anemometer gemessenen Windgeschwindigkeiten aus einer dritten Datenbank; und
- Ermitteln des mindestens einen ANEMO_TI-Werts auf der Grundlage der aus einer vierten Datenbank empfangenen Windgeschwindigkeiten;
- wobei die erste, zweite, dritte und vierte Datenbank gleiche oder unterschiedliche Datenbanken sind.

4. Das computerimplementierte Verfahren nach einem der Ansprüche 1 bis 3, wobei das Abrufen des LIDAR_TI-Werts auf der Grundlage der vom schwimmenden LIDAR gemessenen Windgeschwindigkeiten des Korrekturmodells durch Berechnung eines Verhältniswertes zwischen der Standardabweichung der vom schwimmenden LIDAR gemessenen Windgeschwindigkeiten und den Mittelwerten der entsprechenden, vom schwimmenden LIDAR über einen Zeitraum gemessenen Windgeschwindigkeiten erfolgt.

5. Das computerimplementierte Verfahren nach einem der Ansprüche 1 bis 4, wobei das Abrufen des mindestens einen ANEMO_TI-Werts auf der Grundlage der von dem mindestens einen Anemometer des Korrekturmodells gemessenen Windgeschwindigkeiten durch Berechnung eines Verhältniswertes zwischen der Standardabweichung der von dem mindestens einen Anemometer gemessenen Windgeschwindigkeiten und den Mittelwerten der entsprechenden, von dem mindestens einen Anemometer über den Zeitraum gemessenen Windgeschwindigkeiten erfolgt.

6. Das computerimplementierte Verfahren nach einem der Ansprüche 1 bis 5, wobei das Korrekturmodell ferner dadurch erhalten wird, dass die Teilmenge der Eingangssignale durch eines oder beide der folgenden Verfahren bereitgestellt wird:
- Auswahl eines oder mehrerer der abgerufenen Eingangssignale; und
- Berechnung oder Abruf eines oder mehrerer Sekundärsignale aus den abgerufenen Eingangssignalen.

7. Das computerimplementierte Verfahren nach einem der Ansprüche 1 bis 6, wobei das ML-Modell ein ML-Modell vom Typ "Gradient Boosting" ist.

8. Das computerimplementierte Verfahren gemäß einem der Ansprüche 1 bis 7, wobei die Meereszustandsgrößen des Korrekturmodells Wellengrößen, die signifikante Wellenhöhe, die signifikante Wellenperiode, Salinitätsgrößen, die mittlere Wellenrichtung und die Meerwassertemperatur umfassen.

9. Das computerimplementierte Verfahren nach einem der Ansprüche 1 bis 7, wobei die Meereszustandsgrößen des Korrekturmodells die signifikante Wellenhöhe, die signifikante Wellenperiode und die mittlere Wellenrichtung umfassen.

10. Ein Computerprogrammprodukt, das Anweisungen umfasst, die, wenn das Programm von einem Computer ausgeführt wird, den Computer veranlassen, die Schritte eines Verfahrens gemäß den Ansprüchen 1 bis 9 auszuführen.

11. Ein System zur Korrektur eines Turbulenzintensitätswerts (TI), wobei das System umfasst:
- einen Prozessor; und
- ein nichtflüchtiges, computerlesbares Medium, das mit dem Prozessor in Verbindung steht und einen Befehlscode speichert, der, wenn er vom Prozessor ausgeführt wird, den Prozessor veranlasst, die Schritte eines Verfahrens gemäß einem der Ansprüche 1 bis 9 auszuführen.

12. Das System nach Anspruch 11, wobei das nichtflüchtige, computerlesbare Medium so konfiguriert ist, dass es das Korrekturmodell speichert, wenn das ML-Modell unter Verwendung von Trainingsvariablen auf überwachte Weise trainiert wurde, um eine Teilmenge von Eingangssignalen einem entsprechenden Verhältniswert LIDAR_TI/ANEMO_TI zuzuordnen, wobei die Trainingsvariablen die Teilmenge der Eingangssignale und einen entsprechenden-Verhältniswert LIDAR_TI/ANEMO_TI pro jeder der mehreren Messhöhen; wobei die Teilmenge der Eingangssignale mindestens den LIDAR_TI-Wert an den mehreren Messhöhen, eine vom schwimmenden LIDAR gemessene Standardabweichung der horizontalen Windgeschwindigkeit an den mehreren Messhöhen und die Seegangsmaße umfasst.

13. System nach einem der Ansprüche 11 bis 12, das ferner einen auf einer schwimmenden Plattform montierten schwimmenden LIDAR umfasst.

14. System nach Anspruch 13, wobei der schwimmende LIDAR so konfiguriert ist, dass er die signifikante Wellenhöhe, die signifikante Wellenperiode und die mittlere Wellenrichtung misst.

15. Ein nichtflüchtiges, lesbares Speichermedium, auf dem gespeichert sind:
- Befehle, die, wenn sie von einem Prozessor ausgeführt werden, den Prozessor veranlassen, eines der Verfahren nach den Ansprüchen 1 bis 9 auszuführen.

## Revendications

1. Procédé mis en œuvre par ordinateur pour corriger une valeur d'intensité de turbulence, valeur TI, le procédé comprenant :
- la fourniture d'un modèle de correction pour corriger une valeur d'intensité de turbulence, dans lequel le modèle de correction est obtenu par :
- la récupération de signaux d'entrée, lesdits signaux d'entrée comprenant au moins :
- une valeur d'intensité de turbulence basée sur un LIDAR, valeur LIDAR_TI, fondée sur des vitesses de vent mesurées par un LIDAR flottant à une pluralité de hauteurs de mesure ;
- au moins une valeur d'intensité de turbulence basée sur des anémomètres, valeur ANEMO_TI, fondée sur les vitesses du vent mesurées par des anémomètres montés sur un mât météorologique, aux différentes hauteurs de mesure ;
- un écart-type de la vitesse du vent horizontal aux différentes hauteurs de mesure, mesuré par le LIDAR flottant ; et
- des mesures de l'état de la mer comprenant un ou plusieurs des éléments suivants : des mesures de vagues ; la hauteur significative des vagues ; la période significative des vagues ; la direction moyenne des vagues ; et la température de l'eau de mer ;
- l'entraînement d'un modèle d'apprentissage automatique (ML), mis en œuvre par ordinateur, de manière supervisée à l'aide de variables d'entraînement, afin de mettre en correspondance au moins un sous-ensemble des signaux d'entrée avec une valeur de rapport LIDAR_TI/ANEMO_TI correspondante, dans lequel les variables d'entraînement comprenant ledit au moins un sous-ensemble des signaux d'entrée et une valeur de rapport LIDAR_TI/ANEMO_TI correspondante pour chacune des différentes hauteurs de mesure ; ledit au moins un sous-ensemble des signaux d'entrée comprenant au moins une valeur LIDAR_TI aux différentes hauteurs de mesure, l'écart-type de la vitesse du vent horizontal aux différentes hauteurs de mesure mesurées par le LIDAR flottant, et une ou plusieurs mesures de l'état de la mer ;
- fournir un ensemble de variables environnementales au modèle de correction, l'ensemble de variables environnementales comprenant au moins une valeur LIDAR_TI à une ou plusieurs hauteurs de mesure, un écart-type de la vitesse horizontale du vent aux hauteurs de mesure mesurées par le LIDAR flottant, et des mesures de l'état de la mer ;
- obtenir, à partir du modèle de correction, une valeur de rapport actuelle LIDAR_TI/ANEMO_TI pour chacune des une ou plusieurs hauteurs de mesure ; et
- ournir une valeur LIDAR_TI corrigée pour chacune des une ou plusieurs hauteurs de mesure en calculant le produit de la valeur de rapport actuelle pour chacune des une ou plusieurs hauteurs de mesure et de la valeur LIDAR_TI, de telle sorte que la valeur LIDAR_TI corrigée soit égale au produit de la valeur de rapport actuelle ANEMO_TI/LIDAR_TI par la valeur LIDAR_TI.

2. Procédé mis en œuvre par ordinateur selon la revendication 1, dans lequel la récupération des signaux d'entrée du modèle de correction comprend :
- recevoir les vitesses de vent mesurées par le LIDAR flottant, provenant de ce dernier ;
- obtenir au moins une valeur LIDAR_TI sur la base des vitesses de vent reçues du LIDAR flottant ;
- recevoir les vitesses de vent mesurées par au moins un anémomètre monté sur un mât météorologique à une ou plusieurs hauteurs de mesure, provenant dudit au moins un anémomètre ; et
- obtenir au moins une valeur ANEMO_TI sur la base des vitesses de vent reçues de cet au moins un anémomètre.

3. Procédé mis en œuvre par ordinateur selon la revendication 1, dans lequel la récupération des signaux d'entrée du modèle de correction comprend :
- la réception des vitesses de vent mesurées par le LIDAR flottant à partir d'une première base de données ;
- l'obtention d'au moins une valeur LIDAR_TI sur la base des vitesses de vent reçues d'une deuxième base de données ;
- la réception des vitesses de vent mesurées par au moins un anémomètre monté sur un mât météorologique à partir d'une troisième base de données ; et
- l'obtention d'au moins une valeur ANEMO_TI sur la base des vitesses de vent reçues d'une quatrième base de données ;
- les première, deuxième, troisième et quatrième bases de données étant identiques ou différentes.

4. Procédé mis en œuvre par ordinateur selon l'une quelconque des revendications 1 à 3, dans lequel l'extraction de la valeur LIDAR_TI sur la base des vitesses de vent mesurées par le LIDAR flottant du modèle de correction est effectuée en calculant une valuer de rapport entre l'écart-type des vitesses de vent mesurées par le LIDAR flottant et les valeurs moyennes des vitesses de vent correspondantes mesurées par le LIDAR flottant sur une période donnée.

5. Procédé mis en œuvre par ordinateur selon l'une quelconque des revendications 1 à 4, dans lequel la récupération d'au moins une valeur ANEMO_TI sur la base des vitesses de vent mesurées par au moins un anémomètre du modèle de correction est effectuée en calculant une valeur de rapport entre l'écart-type des vitesses de vent mesurées par ledit au moins un anémomètre et les valeurs moyennes des vitesses de vent correspondantes mesurées par ledit au moins un anémomètre sur ladite période de temps.

6. Procédé mis en œuvre par ordinateur selon l'une quelconque des revendications 1 à 5, dans lequel le modèle de correction est en outre obtenu en fournissant le sous-ensemble des signaux d'entrée par l'une ou l'autre des opérations suivantes, ou les deux :
- sélectionner un ou plusieurs des signaux d'entrée récupérés ; et
- le calcul ou l'extraction d'un ou plusieurs signaux secondaires à partir des signaux d'entrée récupérés.

7. Procédé mis en œuvre par ordinateur selon l'une quelconque des revendications 1 à 6, dans lequel le modèle d'apprentissage automatique est un modèle d'apprentissage automatique de type gradient boosting.

8. Procédé mis en œuvre par ordinateur selon l'une quelconque des revendications 1 à 7, dans lequel les mesures de l'état de la mer du modèle de correction comprennent des mesures des vagues ; la hauteur significative des vagues ; la période significative des vagues ; des mesures de salinité ; la direction moyenne des vagues et la température de l'eau de mer.

9. Procédé mis en œuvre par ordinateur selon l'une quelconque des revendications 1 à 7, dans lequel les états de la mer du modèle de correction comprennent la hauteur significative des vagues, la période significative des vagues et la direction moyenne des vagues.

10. Produit logiciel comprenant des instructions qui, lorsque le programme est exécuté par un ordinateur, amènent celui-ci à mettre en œuvre les étapes d'un procédé selon les revendications 1 à 9.

11. Système destiné à corriger une valeur d'intensité de turbulence TI, le système comprenant :
- un processeur ; et
- un support non transitoire lisible par ordinateur, en communication avec le processeur, et stockant un code d'instructions qui, lorsqu'il est exécuté par le processeur, amène ce dernier à effectuer les étapes d'un procédé selon l'une quelconque des revendications 1 à 9.

12. Système selon la revendication 11, dans lequel le support non transitoire lisible par ordinateur est configuré pour stocker le modèle de correction une fois que le modèle d'apprentissage automatique a été entraîné de manière supervisée à l'aide de variables d'entraînement afin de mettre en correspondance un sous-ensemble de signaux d'entrée avec une valeur de rapport LIDAR_TI/ANEMO_TI correspondante, les variables d'entraînement comprenant le sous-ensemble de signaux d'entrée et une valeur de rapport pour chacune des différentes hauteurs de mesure ; le sous-ensemble de signaux d'entrée comprenant au moins la valeur LIDAR_TI aux différentes hauteurs de mesure, un écart-type de la vitesse du vent horizontal aux différentes hauteurs de mesure mesuré par le LIDAR flottant, et les mesures de l'état de la mer.

13. Système selon l'une quelconque des revendications 11 à 12, comprenant en outre un LIDAR flottant monté sur une plate-forme flottante.

14. Système selon la revendication 13, dans lequel le LIDAR flottant est configuré pour mesurer la hauteur significative des vagues, la période significative des vagues et la direction moyenne des vagues.

15. Support de stockage lisible non transitoire stockant :
- des instructions qui, lorsqu'elles sont exécutées par un processeur, amènent ce dernier à mettre en œuvre l'un quelconque des procédés selon les revendications 1 à 9.
